# EUROPÄISCHE PATENTSCHRIFT

(11) **EP 1 462 599 B1**
(45) Veröffentlichungstag und Bekanntmachung des Hinweises auf die Patenterteilung: **16.05.2007**
(21) Anmeldenummer: 04003563.6
(22) Anmeldetag: 18.02.2004
(51) Int. Cl.: E05D 11/00, H01R 35/04

(54) **Vorrichtung mit elektrischen Kontakten zum Anschliessen von mehrschichtigen Glasscheiben, insbesondere Ganzglastüren**
Device with electrical contacts for connecting multilayered glass panels, in particular plate glass doors
Dispositif avec connexions électriques pour connecter des panneaux de verre multicouches, en particulier des portes entièrement vitrées

(30) Priorität: 26.03.2003 DE 20304980 U; 05.09.2003 DE 20313949 U
(43) Veröffentlichungstag der Anmeldung: 29.09.2004
(73) Patentinhaber: SWS Gesellschaft für Glasbaubeschläge mbH, 51545 Waldbröl (DE)
(72) Erfinder: Rosenthal, Horst, 51545 Geilenkausen (DE)
(74) Vertreter: Lippert, Stachow & Partner

(56) Entgegenhaltungen:
- EP-A- 1 257 005
- DE-U- 20 114 126
- GB-A- 696 256
- US-A- 1 744 040
- US-A- 3 857 625

## Beschreibung

Die Erfindung betrifft eine Vorrichtung mit elektrischen Kontakten, zum Anschließen von mehrschichtigen Glasscheiben, insbesondere von Ganzglastüren, mit Türscharnieren oder Scharnierband, Klemmplatten und Wandbefestigungsteil an eine zweipolige Niederspannungsquelle, wobei die Glasscheibe mindestens eine Strompfade bildende, vorzugsweise transparente, elektrisch leitende Schicht für eine Stromeinspeisung von der Niederspannungsquelle zu elektrischen Verbrauchern an der Glasscheibe aufweist, und wobei der Pluspol und der Minuspol der elektrischen Anschlussverbindung über gegeneinander isolierte, voneinander beabstandete federnde elektrische Kontaktelemente am Drehzapfen von mindestens einem der Türscharniere geführt ist.

Insbesondere bei Ganzglastüren mit elektrisch leitenden Schichten, die mit einer Stromquelle verbunden sind, ergeben sich vielfache Schwierigkeiten, die elektrisch leitende Schicht, die für eine Versorgung von elektrischen Verbrauchern mit Strom mit einem Pluspol und einem Minuspol ausgebildet sein muss, über einen gemeinsamen Stromanschluss an einem der vorhandenen Türscharniere zu versorgen. Schwierigkeiten bereitet hierbei insbesondere die einwandfreie Trennung von Plus- und Minuspol an den beweglichen Teilen des betreffenden Türscharniers. Bei nicht ausreichender Isolierung zwischen Pluspol und Minuspol kann es leicht zu Kurzschlüssen und damit zu einer Unterbrechung der Stromversorgung kommen.

Aus DE 201 14 126 U1 ist ein Band zur schwenkbaren Lagerung eines Flügels, insbesondere einer Tür in einem Rahmen bekannt mit wenigstens einem Bandunterteil und wenigstens einem Bandoberteil, die in Einfräsungen des Rahmens bzw. des Türflügels einsetzbar sind, wobei das Bandoberteil gegenüber dem Bandunterteil mittels eines Achszapfens drehbar gelagert ist.

Bei diesem bekannten Scharnierband geht es darum, ein elektrisches Kabel zum Anschluss von Verbrauchern in den Flügel einer Tür einzuführen, wobei das Kabel möglichst unsichtbar und möglichst wenig mechanischen Beanspruchungen ausgesetzt sein soll. Die Lösung dieses Problems besteht bei diesem bekannten Scharnierband danach darin, dass in das Bandunterteil und das Bandoberteil jeweils ein Kabel einführbar ist, wobei eines der Kabel durch eine den Achszapfen koaxial durchsetzende Bohrung von dem einen Bandteil in das andere Bandteil durchgeführt ist und die beiden Kabel in dem anderen Bandteil mittels eines Steckverbinders miteinander gekuppelt werden können. Auch wenn die beiden Kabelenden innerhalb des Scharnierbandes einen gewissen Bewegungsspielraum haben, stellt jedoch die Steckverbindung zwischen den Kabelenden insofern eine Schwachstelle dar, als beide Kabelenden bei jeder Bewegung des Türflügels gegeneinander verdreht werden und diese Verwindung der Kabel von der Steckverbindung aufgenommen werden müssen.

Aus EP 1 257 005 A1 ist weiterhin eine Klemmvorrichtung zum Befestigen von Platten und insbesondere transparenten Glasscheiben mit zwei am seitlichen Rand der Glasscheiben ansetzbaren Paaren von Klemmbacken bekannt. Diese Klemmbacken weisen an ihren Innenseiten sich an die Glasscheibe anlegende Polster aus elastomerem Werkstoff auf und werden durch mindestens eine Klemmschraube unter Einschluss der Glasscheibe gegeneinander gespannt. Hierbei weist die Platte oder Glasscheibe mindestens eine dünne kohärente elektrisch leitfähige Schicht aus Metall, Metalloxid oder einem mit Fremdatomen dotierten leitfähigen Kunststoff auf, und an mindestens einer der beiden Klemmbacken der Klemmvorrichtung ist eine Anzahl elektrischer Kontaktflächen angeordnet, die einen leitenden Kontakt mit der Schicht an der Glasscheibe herstellen. Der Pluspol und der Minuspol der elektrischen Anschlussverbindung sind über gegeneinander isolierte, voneinander beabstandete federnde elektrische Kontaktelemente geführt, die als Kontaktzungen ausgebildet sind und einen leitenden Kontakt mit der oder den elektrisch leitfähigen Schichten an der Glasscheibe herstellen. Hierdurch ergeben sich zwar vielfältige Möglichkeiten, um die Glasscheiben oder Glastrennwände zusätzlich zu den absturzsichernden Funktionen auch für weitergehende Sicherungsmaßnahmen sowie für optische und/oder akustische Informations-, Signal- und Alarmeinrichtungen wie auch Werbe-Informationsträger oder ähnliches zu nutzen. Für eine Stromversorgung von schwenkbaren Glasscheiben oder Ganzglastüren sind diese Kontaktelemente jedoch nicht geeignet.

Ein Türscharnier, das die Stromzufuhr über gegeneinander isolierte, voneinander beabstandete federnde elektrische Kontaktelemente an seinem Drehzapfen erlaubt, ist auch bereits aus GB 696 256 A ebenso wie aus der gleichlautenden zugehörigen DE-Patentschrift Nr. 850 636 bekannt. Hierbei handelt es sich um einen als Starkstromkippschalter ausgeführten elektrischen Türschalter, von dem aus am Türblatt Schaltleitungen zu einer Schleifringtürangel führen. Diese nur zum Zwecke der Stromübertragung dienende Türangel hat ein in den Türstock eingelassenes Unterteil aus Eisen mit einem Drehzapfen, der von dem metallischen Körper isolierte Schleifringe aus Messing trägt. Diese Schleifringe sind in den Zapfen eingelassen und im Durchmesser gegen den Drehzapfen etwas abgesetzt, so dass über das Oberteil der Türangel keine leitende Verbindung zwischen den Schleifringen entstehen kann. Zwischen Drehzapfen und Eisenteil befindet sich noch eine Hülse aus Isolierstoff. Je nach Art des Türschalters können zwei oder mehrere Schleifringe vorgesehen sein, die durch Leitungen in dem Drehzapfen mit der übrigen Elektroinstallation in Verbindung stehen. Das am Türflügel befestigte Oberteil der Türangel enthält eine Kammer aus Isolierstoff, in der zwei oder mehrere Bolzen durch Federkraft an die Schleifringe radial von außen gepresst werden.

Bei dieser Schleifringtürangel ergeben sich sowohl bei der Montage als auch beim täglichen Einsatz hauptsächlich wegen der versenkten Anordnung der Schleifringe Probleme für eine einwandfreie Kontaktgabe zwischen den Schleifringen und den an diese angepressten Kontaktbolzen, so dass derartige Schleifringtürangeln für eine sichere und dauerhafte Stromversorgung von schwenkbaren Glasscheiben und insbesondere Ganzglastüren nicht geeignet sind.

Der Erfindung liegt die Aufgabe zugrunde, die Stromzufuhr auch bei schwenkbaren Glasscheiben und Ganzglastüren auf einfache und sichere Weise zu gewährleisten.

Diese Aufgabe wird gemäß der Erfindung bei einer Vorrichtung nach dem Oberbegriff des Anspruches 1 dadurch gelöst, dass ein Pol der elektrischen Anschlussverbindung von dem Wandbefestigungsteil des Türscharniers oder Scharnierbandes zu einem ersten federbelasteten Kontaktelement im Drehzapfen und weiter über die Klemmplatte geführt ist und zu einem Strompfad an der elektrisch leitenden Schicht führbar ist, dass der andere Pol der elektrischen Anschlussverbindung über eine ringförmige Kontaktscheibe zwischen Wandbefestigungsteil und Klemmplatte des Türscharniers oder Scharnierbandes, die gegenüber dem Wandbefestigungsteil, dem Drehzapfen und der Klemmplatte elektrisch isoliert ist, und ein Kontaktelement mit einem an der Kontaktscheibe parallel zu dem Drehzapfen angreifenden federnden Kontaktstift in Verbindung steht und mit dem anderen Strompfad an der mehrschichtigen Glasscheibe in elektrisch leitender in Verbindung bringbar ist.

Besonders vorteilhafte Weiterbildungen der Erfindung sind in den Ansprüchen 2 bis 18 gekennzeichnet.

Die Erfindung hat den Vorteil, dass die beiden Pole einer Niederspannungsquelle in einer besonders einfachen und sicheren Anordnung über ein und dasselbe Türscharnier geführt werden und sicher gegeneinander isoliert sind, so dass die elektrische Anschlussverbindung auch unter extremen Beanspruchungen, wie sie insbesondere an häufig bewegten Türflügeln auftreten, nicht beeinträchtigt wird.

Die Erfindung hat auch den weiteren Vorteil, dass die Stromzufuhr zu der Glasscheibe mit den elektrischen Verbrauchern ohne einen zusätzlichen Montageaufwand dauerhaft und verschleißsicher über ein einziges Türscharnier erfolgen kann, ohne dass die Anforderungen an die elektrische Sicherheit in irgendeiner Weise beeinträchtigt werden.

Besonders vorteilhaft ist es dabei, wenn das Wandbefestigungsteil mit einer den Drehzapfen umschließenden rohrförmigen Lagerhülse und Isolierbuchsen ausgebildet ist, die im mittleren Teil des Drehzapfens eine Unterbrechung für das am Drehzapfen federnd gelagerte erste Kontaktelement freilassen, wobei das Kontaktelement an der Innenseite der Lagerhülse anliegt und den elektrischen Kontakt über den Drehzapfen und die Klemmplatte zu der elektrisch leitenden Schicht herstellt.

Auch ergeben sich besonders günstige Voraussetzungen für eine sichere Stromzufuhr, wenn der Drehzapfen mit seinen beiden Enden über die Lagerhülse des Wandbefestigungsteils und die Isolierbuchsen hervorsteht und in koaxial gegenüberliegende Lageröffnung(en) an mindestens einem parallelen Gelenkarm(en) eingreift, die von der Klemmplatte über die zugehörigen stirnseitigen Enden der Lagerhülse hervorstehen. Hierdurch werden unzulässig hohe mechanische Beanspruchungen der elektrischen Kontaktteile in einfacher Weise vermieden.

Zweckmäßig ist der Drehzapfen an der Klemmplatte durch einen an seinem Umfang radial angreifenden Gewindestift drehfest gesichert, während die Isolierbuchsen die Lagerhülse des Wandbefestigungsteils an beiden Stirnseiten mit nach außen gerichteten Flanschen überdecken.

Die ringförmige Kontaktscheibe ist durch einen über den Flansch der einen Isolierbuchse koaxial hervorstehenden, in die Kontaktscheibe konzentrisch eingreifenden Isolierstoffring von dem Drehzapfen beabstandet und elektrisch isoliert.

Eine besonders sichere Kontaktgabe wird auch dadurch erreicht, dass der federnde Kontaktstift von dem benachbarten Gelenkarm der Klemmplatte parallel zu dem Drehzapfen hervorsteht und an der Unterseite der Kontaktscheibe anliegt. Dabei ist zugleich gewährleistet, dass der Kontaktstift die Kontaktscheibe in Anlage an der Isolierbuchse und im Abstand von dem benachbarten Gelenkarm der Klemmplatte hält.

Die Kontaktscheibe kann aus Kupfer oder Messing bestehen, während das Wandbefestigungsteil und die Klemmplatte zumindest teilweise aus einem hochfesten, elektrisch leitenden Werkstoff ausgebildet sind.

Wenn der Pluspol und der Minuspol der elektrischen Anschlussverbindung über die Klemmplatten von mindestens zwei Türscharnieren mit gegeneinander isolierten, voneinander beabstandeten federnden elektrischen Kontaktelementen räumlich voneinander getrennt geführt sind, ergibt sich der weitere Vorteil, dass an jedem der betreffenden Türscharniere lediglich für einen einwandfreien Stromübergang und damit für eine einwandfreie Kontaktgabe zwischen der feststehenden und der beweglichen Scharnierhälfte gesorgt werden muss, während die gegenseitige Isolierung zwischen Plus- und Minuspol bereits durch die räumlich weit auseinanderliegende Stromführung über getrennte Türscharniere sichergestellt wird. Hierdurch wird nicht nur die konstruktive Ausbildung der der Stromzufuhr dienenden Türscharniere ganz wesentlich vereinfacht, sondern auch die Montage der Türscharniere erleichtert und deren Funktionsfähigkeit langfristig sichergestellt.

Bei einer solchen Stromführung können der Pluspol und der Minuspol jeder elektrisch leitenden Schicht über die Klemmplatten von zwei räumlich voneinander getrennten Türscharnieren für die Glasscheibe zu deren Drehzapfen und von dort weiter zu den Wandbefestigungsteilen der Türscharniere und von diesen zu jeweils einem zugehörigen Anschlusskabel geführt sein.

Auch kann bei einer derartigen Vorrichtung mit Türscharnieren, bei denen der Drehzapfen an den Türscharnieren mit einer der beiden Scharnierhälften fest verbunden ist, die Stromführung so ausgebildet sein, dass die elektrische Kontaktgabe von den Klemmplatten jedes der beiden Türscharniere zu dem jeweiligen Drehzapfen vorzugsweise über einen Gewindestift erfolgt, der am Umfang des Drehzapfens radial angreift und den Drehzapfen am Scharnierauge einer Klemmplatte festklemmt.

Bei Vorrichtungen mit Türscharnieren, bei denen eine Relativdrehung zwischen dem an einer der beiden Scharnierhälften befestigten Drehzapfen und einer den Drehzapfen aufnehmenden Bohrung an der anderen Scharnierhälfte stattfindet, ist es weiterhin besonders vorteilhaft, wenn die elektrische Kontaktgabe von dem Drehzapfen zu der Wandung der Bohrung durch einen im Drehzapfen angeordneten federbelasteten Schleifkontaktkörper erfolgt.

Der Drehzapfen kann dabei für einen einwandfreien Stromübergang in seinem mittleren Teil vorteilhafterweise eine senkrecht zur Zapfenachse ausgerichtete Bohrung für einen zylindrischen oder kugelförmigen Schleifkontaktkörper aufweisen. Der Schleifkontaktkörper ist dann zweckmäßig in der Bohrung an dem Drehzapfen durch eine vorzugsweise ringförmige Materialstauchung gesichert. Außerdem können zur Erleichterung der Montage zwischen dem wandseitigen Anschlusskabel und den Wandbefestigungsteilen der Türscharniere jeweils elektrische Steckverbindungen vorhanden sein.

Üblicherweise ist bei einer derartigen Vorrichtung zum Anschluss von mehrschichtigen Glasscheiben, wie Ganzglastüren, an eine Niederspannungsquelle, vorgesehen, dass die elektrisch leitende Schicht in mehrere Strompfade unterteilt ist, die an der Glasscheibe in einer gemeinsamen Ebene liegen und einander gegenüberliegende Pluspole und Minuspole bilden, an die die jeweiligen Stromverbraucher angeschlossen sind.

Ebenso ist es in einer demgegenüber abgewandelten besonders vorteilhaften Ausführungsform aber auch möglich, dass die Glasscheibe zwei einander parallel gegenüberliegende und durch eine Isolationsschicht voneinander getrennte elektrisch leitende Schichten aufweist, von denen jeweils eine über räumlich getrennte Scharnierteile an den Pluspol und die andere an den Minuspol der Niederspannungsquelle angeschlossen ist und mit denen mindestens einer oder mehrere elektrische Verbraucher kontaktiert ist bzw. sind.

Bevorzugte Ausführungsbeispiele der Erfindung sind in der Zeichnung schematisch dargestellt. Das Verständnis der Erfindung erleichtern die Beispiele von Fig. 1 bis Fig. 6, die nicht Gegenstand der Erfindung sind; es zeigen
- Fig. 1: eine Ganzglastür mit elektrischen Strompfaden und zwischen diesen angeordneten Verbrauchern, wobei die Strompfade jeweils räumlich getrennt über obere und untere Türscharniere an den Pluspol und den Minuspol einer Niederspannungsquelle angeschlossen sind,
- Fig. 2: eine gegenüber Fig. 1 abgewandelte Ausführungsform einer Ganzglastür mit mehreren in einer gemeinsamen Ebene nebeneinanderliegenden Strompfaden für mehrere elektrische Verbraucher, die ebenfalls über räumlich weit auseinanderliegende getrennte obere und untere Türscharniere an den Pluspol und den Minuspol einer Niederspannungsquelle angeschlossen sind,
- Fig. 3: eine weitere abgewandelte Ausführungsform einer Ganzglastür, bei der die jeweils räumlich weit auseinanderliegenden beiden Türscharniere, die an den Plus- und den Minuspol einer Stromquelle angeschlossen sind, mit den elektrischen Verbrauchern über mehrere Strompfade verbunden sind, die jeweils über randseitig am Türblatt angeordnete Leiterbahnen mit dem zugehörigen Türscharnier als Pluspol oder Minuspol elektrisch leitend verbunden sind,
- Fig. 4 und Fig. 5: Einzelheiten der Türscharniere von Fig. 1 in vergrößerter Teil-Schnittdarstellung,
- Fig. 6: eine ebenfalls vergrößerte, teilweise geschnittene Darstellung eines der beiden Türscharniere von Fig. 2, während die folgenden Darstellungen
- Fig. 7: eine erfindungsgemäße Ausführungsform einer Ganzglastür mit räumlich weit voneinander getrennten Türscharnieren für einen Anschluss an den Pluspol und den Minuspol einer Stromquelle,
- Fig. 8: eine Stirnansicht der Ganzglastür von Fig. 7,
- Fig. 9: einen gegenüber Fig. 7 und 8 vergrößerten Teilschnitt gemäß Schnittlinie IX - IX durch das Türblatt mit Pluspol und Minuspol zur Versorgung mehrerer elektrischer Verbraucher,
- Fig. 10: eine weitere abgewandelte Ausführungsform mit nur einem Türscharnier oder Scharnierband zum Anschließen der beiden Pole von mehrschichtigen elektrisch leitenden Glasscheiben, insbesondere von Ganzglastüren an eine Niederspannungsquelle in einer Seitenansicht,
- Fig. 11: eine Draufsicht auf das Scharnierband von Fig. 10,
- Fig. 12: einen senkrechten Längsschnitt durch das Scharnierband gemäß Schnittlinie XII - XII von Fig. 11,
- Fig. 13: eine vergrößerte Teildarstellung eines Ausschnittes XIII von Fig. 12,
- Fig. 14: eine vergrößerte Teildarstellung eines weiteren Ausschnittes XIV von Fig. 12 und
- Fig. 15: eine Außenansicht des federnden Kontaktstiftes mit Anschlusskabel zu den Schnittdarstellungen von Fig. 12 und Fig. 14 zeigen.

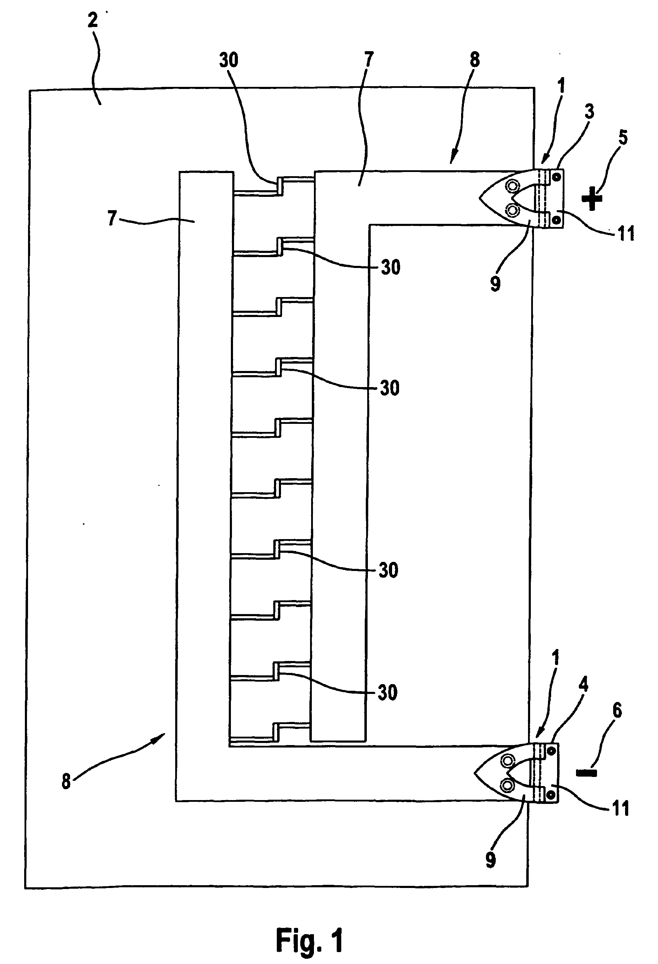

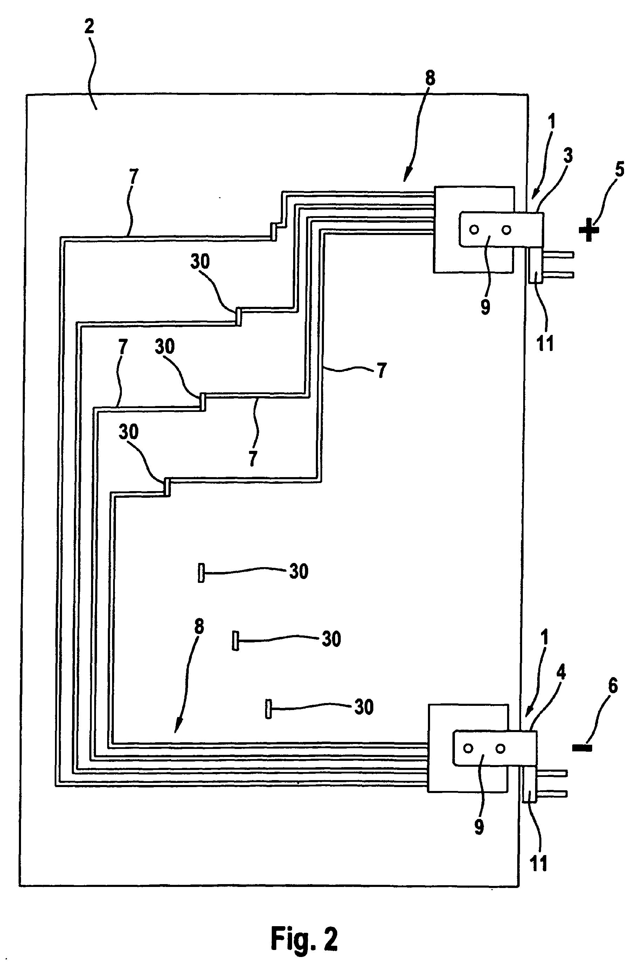

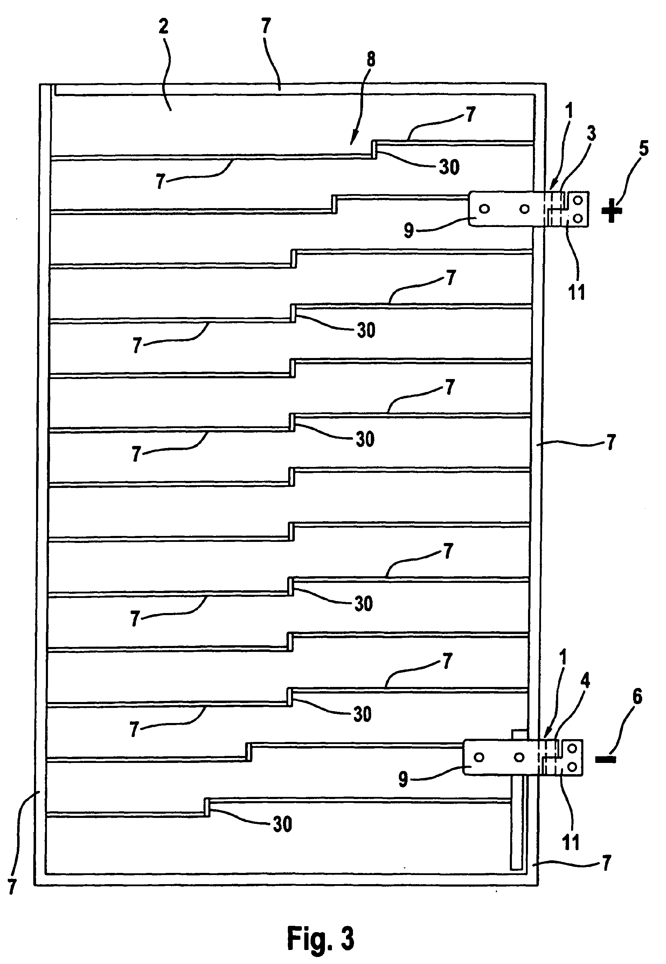

Die Vorrichtungen 1 von Fig. 1 bis 9 sind mit elektrischen Kontakten zum Anschließen von mehrschichtigen Glasscheiben 2, insbesondere von Ganzglastüren mit mindestens zwei Türscharnieren 3, 4 an eine zweipolige Niederspannungsquelle mit einem Pluspol 5 und einem Minuspol 6 ausgebildet. Die Glasscheibe weist mindestens eine Strompfade 7 bildende, vorzugsweise transparente, elektrisch leitende Schicht 8 für eine Stromeinspeisung von der Niederspannungsquelle zu mehreren Stromverbrauchern 30 auf.

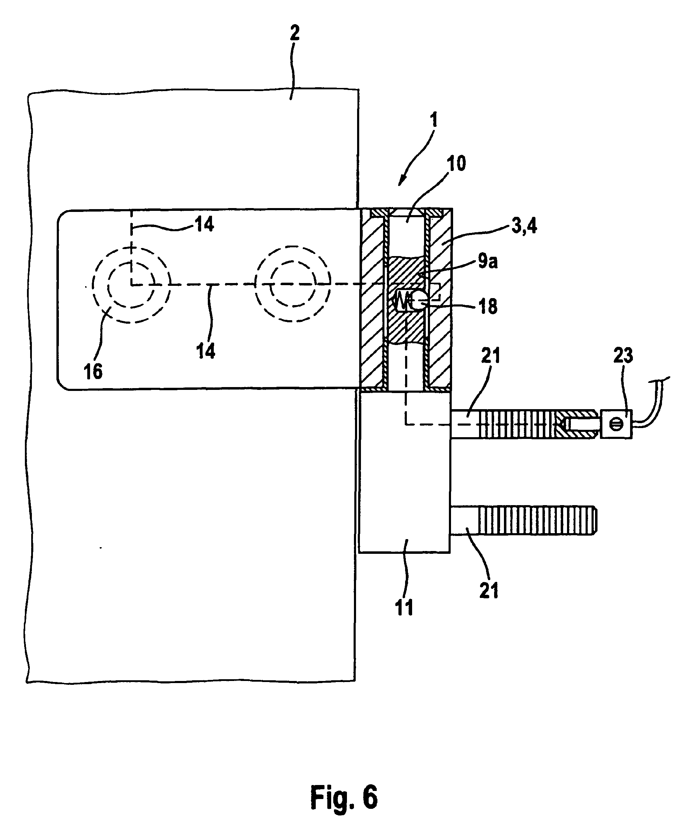

Wie in Fig. 1 bis Fig. 6 und weiter in Fig. 6 bis Fig. 9 im einzelnen gezeigt ist, sind der Pluspol 5 und der Minuspol 6 der elektrischen Anschlussverbindung jeweils räumlich voneinander getrennt über eins der mindestens zwei Türscharniere 3, 4 geführt.

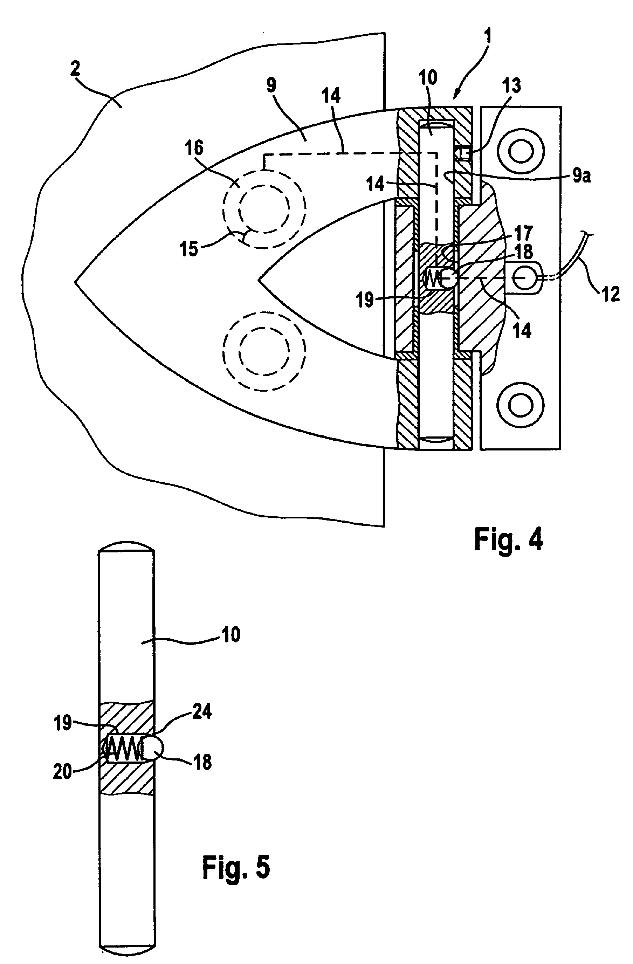

Den Ausführungsformen gemeinsam ist, dass die elektrische Anschlussverbindung von jeder elektrisch leitenden Schicht 8 über die Klemmplatten 9 der beiden Türscharniere 3, 4 für die Glasscheibe 2 zu deren Drehzapfen 10 und von dort weiter zu den Wandbefestigungsteilen 11 der Türscharniere 3, 4 und von diesen zu jeweils einem zugehörigen Anschlusskabel 12 geführt ist. Außerdem ist in der Regel der Drehzapfen 10 mit einer der beiden Scharnierhälften fest verbunden. Bei der Ausführungsform von Fig. 1 und Fig. 4 und 5 erfolgt die elektrische Kontaktgabe von den Klemmplatten 9 jedes der beiden Türscharniere 3, 4 zu dem jeweiligen Drehzapfen 10 vorzugsweise über einen Gewindestift 13 (Fig. 4) oder eine ähnliche Klemmvorrichtung, wobei der Gewindestift 13 in der gezeigten Ausführungsform am Umfang des Drehzapfens 10 radial angreift und den Drehzapfen 10 am Scharnierauge 9a einer Klemmplatte 9 festklemmt.

Der Stromweg 14 ist dabei von der leitenden Schicht 8 (Fig. 1 bis 3) an der Glasscheibe 2, die den Pluspol 5 oder Minuspol 6 der Stromversorgung bildet, über eine Kabelverbindung 15 in Fig. 4 zu einer Klemmschraube 16 an der beweglichen linken Scharnierhälfte, von dort weiter über einen Stromweg 14 zum Drehzapfen 10 und von diesem weiter zum feststehenden rechten Wandteil des Scharniers und zum elektrischen Anschlusskabel 12 geführt.

Wie in Fig. 4 weiterhin zu erkennen ist, findet hierbei eine Relativdrehung zwischen dem an einer der beiden Scharnierhälften befestigten Drehzapfen 10 und einer den Drehzapfen 10 aufnehmenden Bohrung 17 an der anderen Scharnierhälfte statt, und die elektrische Kontaktgabe von dem Drehzapfen 10 zu der Wandung 17 der Bohrung erfolgt durch einen federbelasteten Schleifkontaktkörper 18.

Wie in Fig. 4 und 5 weiterhin zu erkennen ist, weist der Drehzapfen 10 in seinem mittleren Teil eine senkrecht zur Zapfenachse ausgerichtete Bohrung 19 für einen zylindrischen oder kugelförmigen Schleifkontaktkörper 18 auf, wobei der Schleifkontaktkörper 18 durch eine Feder 20 beaufschlagt und in der Bohrung 19 an dem Drehzapfen durch eine vorzugsweise ringförmige Materialstauchung 24 gesichert ist.

Ebenso weist das Türscharnier 3, 4 nach Fig. 6 einen feststehenden Drehzapfen 10 auf, der von der unteren Scharnierhälfte aufragt, die mit zwei Aufnahmen 21, 22 zur Befestigung an einer Holzzarge ausgebildet ist.

Hierbei sind zwischen dem wandseitigen Anschlusskabel 12 und den Wandbefestigungsteilen der beiden Türscharniere 3, 4 jeweils räumlich voneinander getrennte einzelne Steckverbindungen 23 vorhanden.

Bei den vorstehend beschriebenen Ausführungsformen von Fig. 1 bis 6 ist die elektrisch leitende Schicht 8 in mehrere Strompfade 7 unterteilt, die an der Glasscheibe 2 in einer gemeinsamen Ebene liegen und einander gegenüberliegende Pluspole 5 und Minuspole 6 bilden, an die die jeweiligen Stromverbraucher 30 angeschlossen sind.

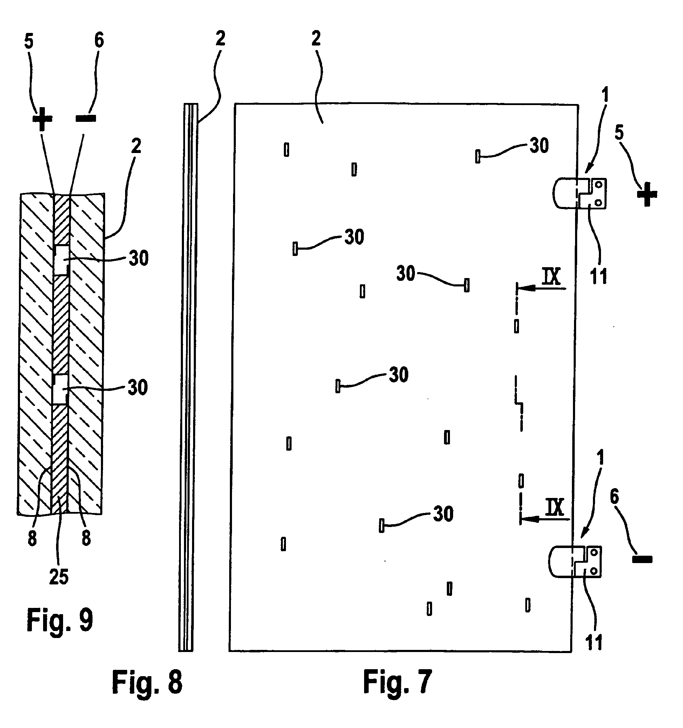

Ebenso wie die vorstehend beschriebenen Ausführungsformen von Fig. 1 bis 6 dient auch die Vorrichtung von Fig. 7 bis 8 zum Anschluss von mehrschichtigen Glasscheiben 2, wie Ganzglastüren, an eine Niederspannungsquelle.

Bei dieser ist jedoch die Glasscheibe 2 mit zwei einander parallel gegenüberliegenden und durch eine Isolationsschicht 25 voneinander getrennten elektrisch leitenden Schichten 8 ausgebildet, von denen jeweils eine über räumlich getrennte Scharnierteile an den Pluspol 5 und die andere an den Minuspol 6 der Niederspannungsquelle angeschlossen ist, und mit denen mindestens einer oder mehrere elektrische Verbraucher 30 kontaktiert ist bzw. sind.

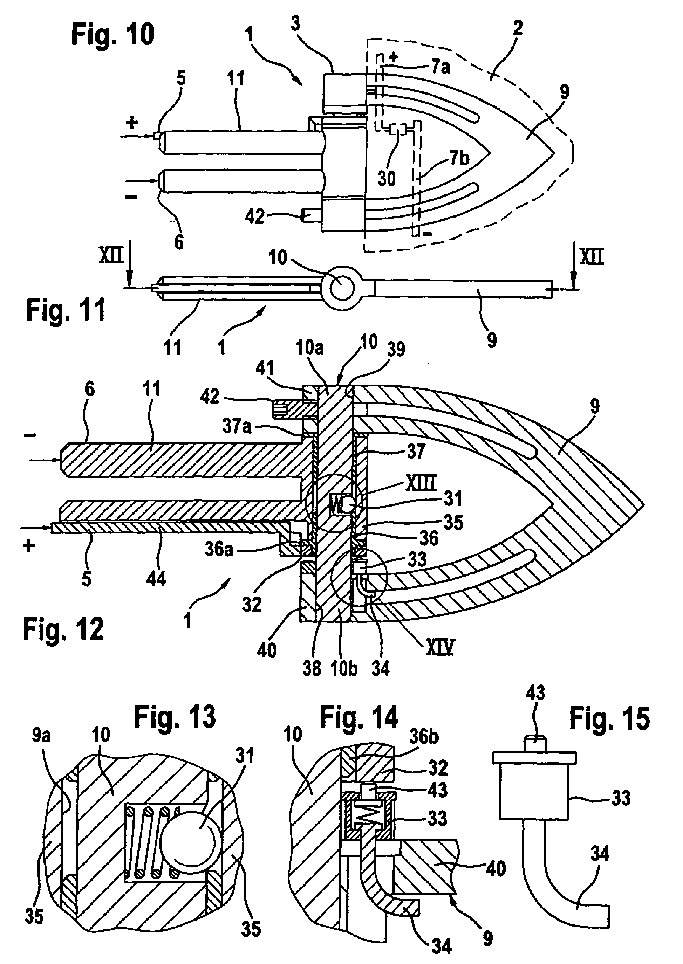

Bei der in Fig. 10 bis 15 gezeigten weiteren Vorrichtung besteht das Türscharnier oder Schamierband 3 aus einem Wandbefestigungsteil 11 mit zwei Aufnahmen zur Befestigung an einer Türzarge, einem Drehzapfen 10 und mindestens einer Klemmplatte 9 sowie elektrischen Kontakten 5, 6 zum Anschließen von mehrschichtigen Glasscheiben 2, insbesondere von Ganzglastüren, an eine zweipolige Niederspannungsquelle. Die Glasscheibe 2 hat dabei ebenso wie bei den ersten Ausführungsbeispielen von Fig. 1 bis 9 mindestens eine Strompfade 7a, 7b bildende, vorzugsweise transparente, elektrisch leitende Schicht 8 für eine Stromeinspeisung von der Niederspannungsquelle über Anschlusskabel zu elektrischen Verbrauchern 30 an der Glasscheibe 2.

Wie in Fig. 10, Fig. 12 und Fig. 13 im einzelnen gezeigt ist, ist ein Pol der elektrischen Anschlussverbindung, und zwar der Minus-Pol 6 von dem Wandbefestigungsteil 11 zu dem mit einem ersten federbelasteten Kontaktelement 31 ausgestatteten Drehzapfen 10 und weiter über die Klemmplatte 9 zu einem der Strompfade 7b an der elektrisch leitenden Schicht 8 geführt. Der andere Pol der elektrischen Anschlussverbindung, nämlich der Plus-Pol 5, ist über eine ringförmige Kontaktscheibe oder einen Kontaktring 32 zwischen Wandbefestigungsteil 11 und Klemmplatte 9 geführt, wobei dieser Kontaktring 32 gegenüber dem Wandbefestigungsteil 11, dem Drehzapfen 10 und der Klemmplatte 9 elektrisch isoliert ist und der Plus-Pol 5 dann von dieser ringförmigen Kontaktscheibe 32 weiter über ein zweites federndes Kontaktelement 33 mit Anschlussleiter 34 zu dem anderen Strompfad 7a an der mehrschichtigen Glasscheibe 2 geführt ist.

Das Wandbefestigungsteil 11 ist mit einer den Drehzapfen 10 umschließenden rohrförmigen Lagerhülse 35 und Isolierbuchsen 36, 37 ausgebildet, die im mittleren Teil des Drehzapfens 10 eine Unterbrechung oder Öffnung für das am Drehzapfen federnd gelagerte erste Kontaktelement 31 freilassen. Das Kontaktelement 31 liegt an der Innenseite der Lagerhülse 35 federnd an und stellt den elektrischen Kontakt über den Drehzapfen 10 und die Klemmplatte 9 zu der elektrisch leitenden Schicht 8 her.

Wie in Fig. 12 weiterhin zu erkennen ist, steht der Drehzapfen 10 mit seinen beiden Enden 10a, 10b über die Lagerhülse 35 des Wandbefestigungsteils 11 und die Isolierbuchsen 36, 37 hervor und greift in einander koaxial gegenüberliegende Lageröffnungen 38, 39 an parallelen Gelenkarmen 40, 41 ein, die von der Klemmplatte 9 über die stirnseitigen Enden der Lagerhülse 35 hervorstehen.

Der Drehzapfen 10 ist an der Klemmplatte 9 durch einen an seinem Umfang radial angreifenden Gewindestift 42 drehfest gesichert. Außerdem überdecken die beiden Isolierbuchsen 36, 37 die Lagerhülse 35 des Wandbefestigungsteils 11 an beiden Stirnseiten mit nach außen gerichteten Flanschen 36a, 37a.

Die ringförmige Kontaktscheibe 32 ist durch einen über den Flansch 36a der einen Isolierbuchse 36 koaxial hervorstehenden, in die Kontaktscheibe konzentrisch eingreifenden Isolierstoffring 36b von dem Drehzapfen 10 beabstandet und elektrisch isoliert. Ferner steht die Kontaktscheibe 32 mit einem federnden Kontaktstift 43 in elektrisch leitender Verbindung, der von dem benachbarten Gelenkarm 40 der Klemmplatte 9 parallel zu dem Drehzapfen 10 hervorsteht und an der Stirnseite der Kontaktscheibe 32 anliegt. Der Kontaktstift 43 hält die Kontaktscheibe 32 auch in Anlage an der Isolierbuchse 36 und im Abstand von dem benachbarten Gelenkarm 40 der Klemmplatte 9. Die Kontaktscheibe 32 besteht aus Kupfer oder Messing und ist an das Zuleitungskabel 44 angelötet, während das Wandbefestigungsteil 11 und die Klemmplatte 9 für die Stromzufuhr zu dem anderen Strompfad 7b an der Glasscheibe 2 zumindest teilweise aus einem hochfesten, elektrisch leitenden Werkstoff bestehen.

Ebenso wie bei dem gezeigten Ausführungsbeispiel von Fig. 10 bis 15, bei dem das Türscharnier oder Scharnierband 3 ein Wandbefestigungsteil 11 mit Lagerhülse 35, einen Drehzapfen 10 und eine Klemmplatte 9 mit zwei parallelen Gelenkarmen 40, 41 aufweist, kann die erfindungsgemäße Kontaktanordnung mit federbelastetem Kontaktelement 31 am Drehzapfen 10 für den einen elektrischen Pol 6 und einer Kontaktscheibe 32 mit federndem Kontaktelement 33 für den anderen Pol 5 auch an einem Türscharnier oder Scharnierband mit einem vom Wandbefestigungsteil 11 aufragenden Drehzapfen 10 und einer darauf eingehängten Klemmplatte mit einem den Drehzapfen aufnehmenden Scharnierauge in gleicher Weise verwirklicht werden.

### Liste der Bezugszeichen

- 1: Vorrichtung
- 2: Glasscheibe
- 3: Türscharnier, Scharnierband
- 4: Türscharnier, Scharnierband
- 5: Pluspol, Kontakt
- 6: Minuspol, Kontakt
- 7: Strompfade
- 7a: Strompfad
- 7b: Strompfad
- 8: elektrisch leitende Schicht
- 9: Klemmplatten
- 9a: Scharnierauge
- 10: Drehzapfen
- 10a: Ende
- 10b: Ende
- 11: Wandbefestigungsteil
- 12: Anschlusskabel
- 13: Gewindestift
- 14: Stromweg
- 15: Kabelverbindung
- 16: Klemmschraube
- 17: Bohrung
- 18: Schleifkontaktkörper
- 19: Bohrung
- 20: Feder
- 21: Aufnahme
- 22: Aufnahme
- 23: Steckverbindung
- 24: Materialstauchung
- 25: Isolationsschicht
- 30: Verbraucher, Stromverbraucher
- 31: Kontaktelement
- 32: Kontaktscheibe, Kontaktring
- 33: Kontaktelement
- 34: Anschlussleiter
- 35: Lagerhülse
- 36: Isolierbuchse
- 36a: Flansch
- 36b: Isolierstoffring
- 37: Isolierbuchse
- 37a: Flansch
- 38: Lageröffnung
- 39: Lageröffnung
- 40: Gelenkarm
- 41: Gelenkarm
- 42: Gewindestift
- 43: federnder Kontaktstift
- 44: Zuleitungskabel

## Patentansprüche

1. Vorrichtung mit elektrischen Kontakten zum Anschließen von mehrschichtigen Glasscheiben (2), insbesondere von Ganzglastüren, die mindestens eine Strompfade (7) bildende elektrisch leitende Schicht (8) für eine Stromeinspeisung von einer Niederspannungsquelle zu elektrischen Verbrauchern (30) an der Glasscheibe aufweisen, an eine zweipolige Niederspannungsquelle, wobei die Vorrichtung ein Türscharnier oder Schamierband (3, 4), Klemmplatten (9) und Wandbefestigungsteile (11) umfasst und wobei der Pluspol (5) und der Minuspol (6) der elektrischen Anschlussverbindung über gegeneinander isolierte, voneinander beabstandete federnde elektrische Kontaktelemente am Drehzapfen (10) von mindestens einem der Türscharniere (3 oder 4) geführt ist, **dadurch gekennzeichnet, dass** ein Pol (6) der elektrischen Anschlussverbindung von dem Wandbefestigungsteil (11) des Türscharniers oder Scharnierbandes (3) zu einem ersten federbelasteten Kontaktelement (31) im Drehzapfen (10) und weiter über die Klemmplatte (9) geführt und von dieser zu einem Strompfad (7b) an der elektrisch leitenden Schicht einer Glasscheibe führbar ist, dass der andere Pol (5) der elektrischen Anschlussverbindung über eine ringförmige Kontaktscheibe (32) zwischen Wandbefestigungsteil (11) und Klemmplatte (9) des Türscharniers oder Scharnierbandes (3), die gegenüber dem Wandbefestigungsteil (11), dem Drehzapfen (10) und der Klemmplatte (9) elektrisch isoliert ist, und ein Kontaktelement (33) mit einem an der Kontaktscheibe (32) parallel zu dem Drehzapfen (10) angreifenden federnden Kontaktstift (43) in Verbindung steht und mit dem anderen Strompfad (7a) an der mehrschichtigen Glasscheibe (2) in elektrisch leitende Verbindung bringbar ist.

2. Vorrichtung nach Anspruch 1, **dadurch gekennzeichnet, dass** das Wandbefestigungsteil (11) mit einer den Drehzapfen (10) umschließenden rohrförmigen Lagerhülse (35) und Isolierbuchsen (36, 37) ausgebildet ist, die im mittleren Teil des Drehzapfens (10) eine Unterbrechung für das erste Kontaktelement (31) freilassen, wobei das Kontaktelement (31) an der Innenseite der Lagerhülse (35) anliegt und den elektrischen Kontakt über den Drehzapfen (10) und die Klemmplatte (9) zu der elektrisch leitenden Schicht herstellt.

3. Vorrichtung nach Anspruch 1 oder 2, **dadurch gekennzeichnet, dass** der Drehzapfen (10) mit seinen beiden Enden (10a, 10b) über die Lagerhülse (35) des Wandbefestigungsteils (11) und die Isolierbuchsen (36, 37) hervorsteht und in koaxial gegenüberliegende Lageröffnung(en) (38, 39) an mindestens einem parallelen Gelenkarm(en) (40, 41) eingreift, die von der Klemmplatte (9) über die zugehörigen stirnseitigen Enden der Lagerhülse (35) hervorstehen.

4. Vorrichtung nach Anspruch 3, **dadurch gekennzeichnet, dass** der Drehzapfen (10) an der Klemmplatte (9) durch einen an seinem Umfang radial angreifenden Gewindestift (42) drehfest gesichert ist.

5. Vorrichtung nach einem der Ansprüche 1 bis 4, **dadurch gekennzeichnet, dass** die Isolierbuchsen (36, 37) die Lagerhülse (35) des Wandbefestigungsteils (11) an beiden Stirnseiten mit nach außen gerichteten Flanschen (36a, 37a) überdecken.

6. Vorrichtung nach einem der Ansprüche 1 bis 5, **dadurch gekennzeichnet, dass** die ringförmige Kontaktscheibe (32) durch einen über den Flansch (36a) der einen Isolierbuchse (36) koaxial hervorstehenden, in die Kontaktscheibe (32) konzentrisch eingreifenden Isolierstoffring (36b) von dem Drehzapfen (10) beabstandet und elektrisch isoliert ist.

7. Vorrichtung nach einem der vorhergehenden Ansprüche, **dadurch gekennzeichnet, dass** der federnde Kontaktstift (43) von dem benachbarten Gelenkarm (40) der Klemmplatte (9) parallel zu dem Drehzapfen (10) hervorsteht und an der Unterseite der Kontaktscheibe (32) anliegt.

8. Vorrichtung nach Anspruch 7, **dadurch gekennzeichnet, dass** der Kontaktstift (43) die Kontaktscheibe (32) in Anlage an der Isolierbuchse (36) und im Abstand von dem benachbarten Gelenkarm (40) der Klemmplatte hält.

9. Vorrichtung nach den vorhergehenden Ansprüchen, **dadurch gekennzeichnet, dass** die Kontaktscheibe (32) aus Kupfer oder Messing besteht.

10. Vorrichtung nach einem der vorhergehenden Ansprüche, **dadurch gekennzeichnet, dass** das Wandbefestigungsteil (11) und die Klemmplatte (9) zumindest teilweise aus einem hochfesten, elektrisch leitenden Werkstoff bestehen.

11. Vorrichtung nach Anspruch 1, **dadurch gekennzeichnet, dass** der Pluspol (5) und der Minuspol (6) jeder elektrisch leitenden Schicht (8) über die Klemmplatten (9) von zwei räumlich voneinander getrennten Türscharnieren (3, 4) für die Glasscheibe (2) zu deren Drehzapfen (10) und von dort weiter zu den Wandbefestigungsteilen (11) der Türscharniere (3, 4) und von diesen zu jeweils einem zugehörigen Anschlusskabel (12) geführt sind.

12. Vorrichtung nach den Ansprüchen 1 und 11 mit Türscharnieren, bei denen der Drehzapfen (10) an den Türscharnieren (3, 4) mit einer der beiden Scharnierhälften fest verbunden ist, **dadurch gekennzeichnet, dass** die elektrische Kontaktgabe von den Klemmplatten (9) jedes der beiden Türscharniere (3, 4) zu dem jeweiligen Drehzapfen (10) vorzugsweise über einen Gewindestift (13, 42) erfolgt, der am Umfang des Drehzapfens (10) radial angreift und den Drehzapfen (10) am Scharnierauge (9a) einer Klemmplatte (9) festklemmt.

13. Vorrichtung nach Anspruch 1 mit Türscharnieren, bei denen eine Relativdrehung zwischen dem an einer der beiden Scharnierhälften befestigten Drehzapfen (10) und einer den Drehzapfen aufnehmenden Bohrung (17) an der anderen Scharnierhälfte stattfindet, **dadurch gekennzeichnet, dass** die elektrische Kontaktgabe von dem Drehzapfen (10) zu der Wandung der Bohrung (17) durch einen im Drehzapfen (10) angeordneten federbelasteten Schleifkontaktkörper (18) erfolgt.

14. Vorrichtung nach Anspruch 13, **dadurch gekennzeichnet, dass** der Drehzapfen (10) in seinem mittleren Teil eine senkrecht zur Zapfenachse ausgerichtete Bohrung (19) für einen zylindrischen oder kugelförmigen Schleifkontaktkörper (18) aufweist.

15. Vorrichtung nach Anspruch 14, **dadurch gekennzeichnet, dass** der Schleifkontaktkörper (18) in der Bohrung (19) an dem Drehzapfen (10) durch eine Materialstauchung (24) gesichert ist.

16. Vorrichtung nach einem der Ansprüche 1 bis 15 mit wandseitigem Anschlusskabel (12) zu mindestens einem Türscharnier, **dadurch gekennzeichnet, dass** zwischen dem wandseitigen Anschlusskabel (12) und den Wandbefestigungsteilen der Türscharniere (3, 4) jeweils elektrische Steckverbindungen (23) vorhanden sind.

17. Vorrichtung zum Anschluss von mehrschichtigen Glasscheiben, wie Ganzglastüren, an eine Niederspannungsquelle nach einem der Ansprüche 1 bis 16, **dadurch gekennzeichnet, dass** die elektrisch leitende Schicht (8) in mehrere Strompfade (7) unterteilt ist, die an der Glasscheibe (2) in einer gemeinsamen Ebene liegen und einander gegenüberliegende Pluspole (5) und Minuspole (6) bilden, an die die jeweiligen Stromverbraucher (30) angeschlossen sind.

18. Vorrichtung zum Anschluss von mehrschichtigen Glasscheiben, wie Ganzglastüren, an eine Niederspannungsquelle nach einem der Ansprüche 1 bis 16, **dadurch gekennzeichnet, dass** die Glasscheibe (2) zwei einander parallel gegenüberliegende und durch eine Isolationsschicht (25) voneinander getrennte elektrisch leitende Schichten (8) aufweist, von denen jeweils eine über räumlich getrennte Scharnierteile an den Pluspol (5) und die andere an den Minuspol (6) der Niederspannungsquelle angeschlossen ist und mit denen mindestens ein oder mehrere elektrische Verbraucher (30) kontaktiert ist bzw. sind.

19. Vorrichtung mit elektrischen Kontakten zum Anschließen von mehrschichtigen Glasscheiben (2), insbesondere von Ganzglastüren, an eine zweipolige Niederspannungsquelle, und mit Türscharnieren oder Scharnierband (3, 4), Klemmplatten (9) und Wandbefestigungsteil (11), wobei die mit umfasste Glasscheibe (2) mindestens eine Strompfade (7) bildende elektrisch leitende Schicht (8) für eine Stromeinspeisung von der Niederspannungsquelle zu elektrischen Verbrauchern (30) an der Glasscheibe aufweist, und wobei der Pluspol (5) und der Minuspol (6) der elektrischen Anschlussverbindung über gegeneinander isolierte, voneinander beabstandete federnde elektrische Kontaktelemente am Drehzapfen (10) von mindestens einem der Türscharniere (3 oder 4) geführt ist, **dadurch gekennzeichnet, dass** ein Pol (6) der elektrischen Anschlussverbindung von dem Wandbefestigungsteil (11) des Türscharniers oder Scharnierbandes (3) zu einem ersten federbelasteten Kontaktelement (31) im Drehzapfen (10) und weiter über die Klemmplatte (9) zu einem Strompfad (7b) an der elektrisch leitenden Schicht geführt ist, dass der andere Pol (5) der elektrischen Anschlussverbindung über eine ringförmige Kontaktscheibe (32) zwischen Wandbefestigungsteil (11) und Klemmplatte (9) des Türscharniers oder Scharnierbandes (3), die gegenüber dem Wandbefestigungsteil (11), dem Drehzapfen (10) und der Klemmplatte (9) elektrisch isoliert ist, und ein Kontaktelement (33) mit einem an der Kontaktscheibe (32) parallel zu dem Drehzapfen (10) angreifenden federnden Kontaktstift (43) mit dem anderen Strompfad (7a) an der mehrschichtigen Glasscheibe (2) in elektrisch leitender Verbindung steht.

## Claims

1. Device with electrical contacts for connecting to a bipolar low voltage source multi-layered glass panels (2), in particular plate glass doors, which include at least one electrically conducting layer (8) forming current paths (7) for supplying electrical current from a low voltage source to electrical consumers (30) on the glass panel, said device comprising a door hinge or strap hinge (3, 4), clamping plates (9) and wall mounting parts (11), wherein the positive pole (5) and the negative pole (6) of the electric terminal connection is guided by at least one of the door hinges (3 or 4) through mutually insulated and spaced springy contact elements on the pivot pin (10), **characterized in that** one pole (6) of the electric terminal connection is guided from the wall mounting part (11) of the door hinge or strap hinge (3) to a first spring-loaded contact element (31) in the pivot pin (10) and further via clamping plate (9) and can be guided from said clamping plate (9) to a current path (7b) on the electrically conducting layer of a glass panel, that the other pole (5) of the electric terminal connection is in connection with a springy contact pin (43) engaging an annular contact disk (32) parallel to the pivot pin (10) via said contact disk (32) between the wall mounting part (11) and the clamping plate (9) of the door hinge or strap hinge (3), which contact disk is electrically insulated against the wall mounting part (11), pivot pin (10) and clamping plate (9), and via a contact element (33), and can be conductively connected to the other current path (7a) on said multi-layered glass panel (2).

2. Device according to claim 1, **characterized in that** said wall mounting part (11) is formed with a tubular bearing sleeve (35) surrounding pivot pin (10) and with insulating sleeves (36, 37) which in the central part of said pivot pin (10) spare a gap for the first contact element (31), with said contact element (31) resting against the inside of bearing sleeve (35) and making the electric contact with the electrically conducting layer through said pivot pin (10) and said clamping plate (9).

3. Device according to claim 1 or 2, **characterized in that** said pivot pin (10) protrudes with its both ends (10a, 10b) over the bearing sleeve (35) of the wall mounting part (11) and over the insulating sleeves (36, 37) and engages in coaxially opposite bearing opening(s) (38, 39) on at least one parallel bracket(s) (40, 41) protruding from clamping plate (9) over the associated front ends of said bearing sleeve (35).

4. Device according to claim 3, **characterized in that** the pivot pin (10) is fixed against rotation to the clamping plate (9) by a threaded pin (42) radially engaging its periphery.

5. Device according to one of the claims 1 to 4, **characterized in that** the insulating sleeves (36, 37) overlap said bearing sleeve (35) of the wall mounting part (11) on both faces by outwardly directed flanges (36a, 37a).

6. Device according to one of the claims 1 to 5, **characterized in that** said annular contact disk (32) is spaced and electrically insulated from pivot pin (10) by an insulating material ring (36b) that coaxially protrudes over the flange (36a) of said one insulating sleeve (36) and concentrically engages in said contact disk (32).

7. Device according to one of the preceding claims, **characterized in that** said springy contact pin (43) protrudes from the adjacent bracket (40) of clamping plate (9) parallel to the pivot pin (10) and rests against the underside of said contact disk (32).

8. Device according to claim 7, **characterized in that** said contact pin (43) holds said contact disk (32) in abutment against the insulating sleeve (36) and at a distance from the adjacent bracket (40) of the clamping plate.

9. Device according to one of the preceding claims,
**characterized in that** said contact disk (32) consists of copper or brass.

10. Device according to one of the preceding claims, **characterized in that** said wall mounting part (11) and said clamping plate (9) consist at least partially of a high-strength electrically conducting material.

11. Device according to claim 1, **characterized in that** the positive pole (5) and the negative pole (6) of each electrically conducting layer are guided via said clamping plates (9) from two mutually spatially separated door hinges (3, 4) for the glass panel (2) to the pivot pin (10) thereof and from there further to the wall mounting parts (11) of the door hinges (3, 4) and from said door hinges to a respective connecting cable (12).

12. Device according to the claims 1 and 11, comprising door hinges wherein said pivot pin (10) on the door hinges (3, 4) is rigidly connected to one of two hinge halves, **characterized in that** the electrical contact making from the clamping plates (9) of each of the two door hinges (3, 4) to the respective pivot pin (10) is effected through a threaded pin (13, 42) which radially engages the periphery of pivot pin (10) and clamps said pivot pin (10) against the gudgeon (9a) of a clamping plate (9).

13. Device according to claim 1, comprising door hinges wherein a relative rotation takes place between the pivot pin (10) which is fixed to one of the two hinge halves and a bore (17) on the other hinge half receiving said pivot pin (10), **characterized in that** the electrical contact making from the pivot pin (10) to the wall of the bore (17) is effected through a spring-loaded sliding contact body (18) arranged in said pivot pin (10).

14. Device according to claim 13, **characterized in that** said pivot pin (10) includes in the central part thereof a bore (19) for a cylindrical or spherical sliding contact body (18), which bore is aligned vertically with respect to the pin axis.

15. Device according to claim 14, **characterized in that** said sliding contact body (18) within said bore (19) is locked to the pivot pin (10) by a material upsetting deformation (24).

16. Device according to one of the claims 1 to 15, comprising a wall-side connecting cable (12) to a least one door hinge, **characterized in that** there are respective electric plug connections (23) between said wall-side connecting cable (12) and the wall mounting parts of the door hinges (3, 4).

17. Device for connecting multi-layered glass panels like plate glass doors to a low voltage source according to one of the claims 1 to 16, c h a r a c t e r i z e d i n that the electrically conducting layer (8) is divided into several current paths (7) which lie in a common plane on the glass panel (2) and which form mutually opposite positive poles (5) and negative poles (6) to which the respective current consumers (30) are connected.

18. Device for connecting multi-layered glass panels like plate glass doors to a low voltage source according to one of the claims 1 to 16, **characterized in that** the glass panel (2) includes two mutually parallel opposite electrically conducting layers (8) which are separated from each other by an insulating layer, one of which being connected to the positive pole (5) and the other one to the negative pole (6) of the low voltage source through spatially separated hinge parts and which are contacted by at least one or more electrical consumers (30).

19. Device with electrical contacts for connecting multi-layered glass panels (2), in particular plate glass doors, to a bipolar low voltage source, and with door hinges or strap hinge (3, 4), clamping plates (9) and wall mounting part (11), wherein said glass panel (2) that is comprised includes at least one electrically conducting layer (8) forming current paths (7) for current supply from the low voltage source to electric consumers (30) on the glass panel (2), and wherein the positive pole (5) and the negative pole (6) of the electric terminal connection are guided via mutually insulated and mutually spaced springy electric contact elements on the pivot pin (10) of at least one of the door hinges (3 or 4), **characterized in that** one pole (6) of the electric terminal connection is guided from the wall mounting part (11) of the door hinge or strap hinge (3) to a first spring-loaded contact element (31) in the pivot pin (10) and further via clamping plate (9) to a current path (7b) on the electrically conducting layer, that the other pole (5) of the electric terminal connection is in an electrically conducting connection with the other current path (7a) on the multi-layered glass panel (2) via an annular contact disk (32) between the wall mounting part (11) and the clamping plate (9) of the door hinge or strap hinge (3) which is insulated against said wall mounting part (11), pivot pin (10) and clamping plate (9), and via a contact element (33) with a springy contact pin (43) engaging said contact disk (32) parallel to said pivot pin (10).

## Revendications

1. Dispositif avec contacts électriques pour connecter des panneaux de verre multicouches (2), en particulier des portes entièrement vitrées, qui comprend au moins une couche électroconductrice (8) qui forme des trajets de courant (7) pour une alimentation de courant d'une source basse tension à des consommateurs électriques (3) sur le panneau de verre à une source basse tension bipolaire, le dispositif comprenant une charnière de porte ou une bande charnière (3, 4), des plaques de serrage (9) et des pièces de fixation murales (11) et le pôle positif (5) et le pôle négatif (6) de la connexion électrique étant guidé par des éléments de contact électriques élastiques, espacés l'un de l'autre, isolés l'un par rapport à l'autre, sur le pivot (10) par au moins l'une des charnières de porte (3 ou 4), **caractérisé en ce qu'**un pôle (6) de la connexion électrique est guidé par la pièce de fixation murale (11) de la charnière de porte ou d'une bande charnière (3) vers un premier élément de contact sollicité par ressort (31) dans le pivot (10) et ensuite par la plaque de serrage (9) et peut être conduit par celle-ci vers un trajet de courant (7b) sur la couche électroconductrice d'un panneau de verre, que l'autre pôle (5) de la connexion électrique est en relation par un disque de contact annulaire (32) entre la pièce de fixation murale (11) et la plaque de serrage (9) de la charnière de porte ou de la bande charnière (3), qui est isolée électriquement par rapport à la pièce de fixation murale (11), au pivot (10) et à la plaque de serrage (9), et un élément de contact (33) avec une broche de contact (43) élastique sur le disque de contact (32), broche qui attaque parallèlement au pivot (10), et qui peut être amené en relation électrique avec l'autre trajet de courant (7a) sur le panneau de verre multicouche (2).

2. Dispositif selon la revendication 1, **caractérisé en ce que** la pièce de fixation murale (11) est configurée avec une douille de positionnement (35) tubulaire qui entoure le pivot (10) et des douilles d'isolation (36, 37) qui laissent libre une interruption pour le premier élément de contact (31) dans la partie centrale du pivot (10), l'élément de contact (31) reposant sur le côté intérieur de la douille de positionnement (35) et réalisant le contact électrique avec la couche électroconductrice par le pivot (10) et la plaque de serrage (9).

3. Dispositif selon la revendication 1 ou 2, **caractérisé en ce que** le pivot (10) fait saillie avec ses deux extrémités (10a, 10b) par l'intermédiaire de la douille de positionnement (35) de la pièce de fixation murale (11) et les douilles d'isolation (36, 37) et s'engrène dans des ouvertures de positionnement (38, 39) opposées coaxialement sur au moins un/des bras articulé(s) parallèle(s) (40, 41) qui font saillie de la plaque de serrage (9) au-delà des extrémités frontales correspondantes de la douille de positionnement (35).

4. Dispositif selon la revendication 3, **caractérisé en ce que** le pivot (10) est bloqué résistant à la rotation sur la plaque de serrage (9) par une broche filetée (42) qui attaque radialement sur sa périphérie.

5. Dispositif selon l'une des revendications 1 à 4, **caractérisé en ce que** les douilles d'isolation (36, 37) recouvrent la douille de positionnement (35) de la pièce de fixation murale (11) sur les deux côtés frontaux avec des brides (36a, 37a) orientées vers l'extérieur.

6. Dispositif selon l'une des revendications 1 à 5, **caractérisé en ce que** le disque de contact annulaire (32) est espacé du pivot (10) par un anneau en matière isolante (36b) qui fait saillie coaxialement au-delà de la bride (36a) de l'une des douilles isolantes (36) et qui s'engrène concentriquement dans le disque de contact (32) et qui est isolé électriquement.

7. Dispositif selon l'une des revendications précédentes, **caractérisé en ce que** la broche de contact élastique (43) fait saillie du bras articulé voisin (40) de la plaque de serrage (9) parallèlement au pivot (10) et qui repose sur le côté inférieur du disque de contact (32).

8. Dispositif selon la revendication 7, **caractérisé en ce que** la broche de contact (43) maintient le disque de contact (32) en appui sur la douille isolante (36) et espacé du bras articulé voisin (40) de la plaque de serrage.

9. Dispositif selon les revendications précédentes, **caractérisé en ce que** le disque de contact (32) est en cuivre ou laiton.

10. Dispositif selon l'une des revendications précédentes, **caractérisé en ce que** la pièce de fixation murale (11) et la plaque de serrage (9) sont au moins partiellement en matière électroconductrice extrêmement résistante.

11. Dispositif selon la revendication 1, **caractérisé en ce que** le pôle positif (5) et le pôle négatif (6) de chaque couche électroconductrice (8) sont guidés par les plaques de serrage (9) par deux charnières de porte (3, 4) séparées spatialement pour le panneau de verre (2) vers leurs pivots (10) et de là ensuite vers les pièces de fixation murale (11) des charnières de porte (3, 4) et de celles-ci vers un câble de raccord correspondant respectif (12).

12. Dispositif selon les revendications 1 et 11 avec des charnières de porte pour lesquelles le pivot (10) est relié fixement aux charnières de porte (3, 4) avec l'une des deux moitiés de charnières de porte, **caractérisé en ce que** l'établissement d'un contact électrique se fait par les plaques de serrage (9) de chacune des deux charnières de porte (3, 4) au pivot respectif (10) de préférence par une broche filetée (13, 42) qui attaque radialement sur la périphérie du pivot (10) et qui coïnce le pivot (10) sur l'oeil de charnière (9a) d'une plaque de serrage (9).

13. Dispositif selon la revendication 1 avec des charnières de porte pour lesquelles une rotation relative a lieu entre le pivot (10) fixé à l'une des deux moitiés de charnière et une forure (17) qui loge le pivot sur l'autre moitié de charnière, **caractérisé en ce que** l'établisement du contact électrique du pivot (10) à la paroi de la forure (17) se fait par un corps de contact frotteur (18) sollicité par ressort placé dans le pivot (10).

14. Dispositif selon la revendication 13, **caractérisé en ce que** le pivot (10) présente, dans sa partie centrale, une forure (19) orientée perpendiculairement à l'axe du pivot pour un corps de contact frotteur cylindrique ou sphérique (18).

15. Dispositif selon la revendication 14, **caractérisé en ce que** le corps du contact frotteur (18) est bloqué dans la forure (19) sur le pivot (10) par un refoulement de matière (24).

16. Dispositif selon l'une des revendications 1 à 15 avec un câble de raccord côté mur (12) vers au moins une charnière de porte, **caractérisé en ce que** des fiches de raccordement électriques (23) existent respetivement entre le câble de raccord côté mur (12) et les pièces de fixation murales des charnières de porte (3, 4).

17. Dispositif pour connecter des panneaux de verre multicouches, comme des portes entièrement vitrées, à une source basse tension selon l'une des revendications 1 à 16, **caractérisé en ce que** la couche électroconductrice (2) est divisée en plusieurs trajets de courant (7) qui sont situés sur le panneau de verre (2) dans un plan commun et qui forment des pôles positifs (5) et des pôles négatifs (6) opposés l'un à l'autre auxquels les consommateurs de courant respectifs (30) sont branchés.

18. Dispositif pour connecter des panneaux de verre multicouches, comme des portes entièrement vitrées, à une source basse tension selon l'une des revendications 1 à 16, **caractérisé en ce que** le panneau de verre (2) présente deux couches électroconductrices (8) opposées parallèles l'une à l'autre et séparées l'une de l'autre par une couche isolante (25), dont l'une est respectivement raccordée par des pièces de charnière séparées spatialement au pôle positif (5) et l'autre au pôle négatif (6) de la source basse tension et avec lesquelles au moins un ou plusieurs consommateurs électriques (30) est ou sont en contact.

19. Dispositif avec des contacts électriques pour connecter des panneaux de verre multicouches (2), en particulier des portes entièrement vitrées, à une source basse tension bipolaire et avec des charnières de porte ou une bande charnière (3, 4), des plaques de serrage (9) et une pièce de fixation murale (11), le panneau de verre entouré (2) présentant au moins une couche électroconductrice (8) formant des trajets de courant (7) pour une alimentation en courant de la source basse tension vers les consommateurs électriques (30) sur le panneau de verre et le pôle positif (5) et le pôle négatif (6) de la connexion électrique étant guidés par des éléments de contact électriques élastiques isolés l'un par rapport à l'autre et espacés l'un de l'autre sur le pivot (10) par au moins l'une des charnières de porte (3 ou 4), **caractérisé en ce qu'**un pôle (6) de la connexion électrique est guidé de la pièce de fixation murale (11) de la charnière de porte ou de la bande charnière (3) vers un premier élément de contact sollicité par ressort (31) dans le pivot (10) et ensuite par la plaque de serrage (9) vers un trajet de courant (7b) sur la couche électroconductrice, que l'autre pôle (5) de la connexion électrique est en relation électroconductrice par un disque de contact annulaire (32) entre la pièce de fixation murale (11) et la plaque de serrage (9) de la charnière de porte ou de la bande charnière (3), qui est isolée électriquement de la pièce de fixation murale (11), du pivot (10) et de la plaque de serrage (9), et un élément de contact (33) avec une broche de contact élastique (43) qui attaque le disque de contact (32) parallèlement au pivot (10) avec l'autre trajet de courant (7a) sur le panneau de verre multicouche (2).
